# EUROPEAN PATENT APPLICATION

(11) **EP 4 451 167 A1**
(43) Date of publication of application: **23.10.2024**
(21) Application number: 24171398.1
(22) Date of filing: 19.04.2024
(51) Int. Cl.: G06F 30/23, G10K 11/16, G10K 11/168, G06F 111/10, G06F 113/08, G06F 119/10

(54) **FULLY NUMERICAL PROCESS FOR IMPEDANCE EDUCTION OF ACOUSTIC LINER**

(30) Priority: 20.04.2023 US 202363497349 P; 30.08.2023 US 202318458531
(71) Applicant: Dassault Systèmes Americas Corp., Waltham, MA 02451 (US)
(72) Inventor: Cerizza, Davide, Minato City, Tokyo, 106-0031 (JP); CASALINO, Damiano, 71272 Malmsheim (DE)
(74) Representative: Bandpay & Greuter

(57) **Abstract**

Embodiments determine acoustic impedance of liners. An embodiment defines a three-dimensional (3D) computer-based model of a liner and performs a digital experiment of the liner in an environment using the defined model. Results of performing the digital experiment include a reference transfer function. A two-dimensional (2D) model of the environment is generated where the liner is represented by an acoustic impedance boundary condition with an impedance value defined by a resistance value, reactance value, and non-linear coefficient. Iteratively, the impedance value is modified and a 2D simulation is performed using the generated 2D model of the environment with the acoustic impedance boundary condition with the modified impedance value, until a transfer function resulting from performing the 2D simulation matches the reference transfer function. The modified impedance value used in performing the 2D simulation resulting in the transfer function matching the reference transfer function is acoustic impedance of the liner.

## Description

### BACKGROUND

A number of existing product and simulation systems are offered on the market for the design and simulation of objects, e.g., vehicles. Such systems typically employ computer aided design (CAD) and computer aided engineering (CAE) programs. These systems allow a user to construct, manipulate, and simulate complex three-dimensional models of objects or assemblies of objects. These CAD and CAE systems provide a model representation of obj ects, e.g., real-world objects, using edges or lines, in certain cases with faces. Lines, edges, faces, or polygons may be represented in various manners, e.g., non-uniform rational basis-splines (NURBS).

Such systems manage parts or assemblies of parts of modeled objects, which are mainly specifications of geometry. In particular, CAD files contain specifications, from which geometry is generated. From geometry, a three-dimensional CAD model or model representation is generated. Specifications, geometries, and CAD models/representations may be stored in a single CAD file or multiple CAD files. CAD or other such CAE systems include graphic tools for visually representing the modeled objects as represented in 3-dimensional space to designers; these tools are dedicated to the display of complex real-world objects. For example, an assembly may contain thousands of parts.

The advent of CAD and CAE systems allows for a wide range of representation possibilities, such as CAD models, for objects. Computer-based models may be programmed in such a way that the model has the properties (e.g., physical, material, or other physics-based) of the underlying real-world object or objects that the model represents. Example properties include stiffness (ratio of force to displacement), plasticity (irreversible strain), and viscosity (resistance to flow of one layer over an adjacent layer), amongst others. When a CAD or other such computer-based model as is known in the art, is programmed in such a way, it may be used to perform simulations of the object that the model represents. For example, a mesh-based model may be used to represent the interior cavity of a vehicle, the acoustic fluid surrounding a structure, or any number of real-world objects. Moreover, CAD and CAE systems, along with computer-based models, can be utilized to simulate engineering systems, such as real-world physical systems, e.g., cars, airplanes, buildings, and bridges, amongst other examples. Further, CAE systems can be employed to simulate any variety and combination of behaviors of these physics based systems, such as noise and vibration.

### SUMMARY

Noise simulation is a task implemented by existing simulation methods and oftentimes, these existing methods will determine properties, e.g., noise reduction capabilities, of real-world objects, e.g., liners. Recently, however, objects of interest, e.g., liners, have become increasingly complex and improved methods for simulating the objects and determining properties of said objects are needed. Embodiments provide such functionality.

One such embodiment is directed to a computer-implemented method for determining acoustic impedance of a liner. The method defines a three-dimensional (3D) computer-based model of a liner and performs a digital experiment of the liner in an environment using the defined 3D computer-based model of the liner. Results of performing the digital experiment include a reference transfer function. To continue, a two-dimensional (2D) model of the environment is generated, in which, the liner is represented in the generated 2D model of the environment by an acoustic impedance boundary condition with an impedance value where the impedance value is defined by a resistance value, a reactance value, and a non-linear coefficient value. In turn, the method iteratively (i) modifies the impedance value and (ii) performs a 2D simulation using the generated 2D model of the environment with the acoustic impedance boundary condition with the modified impedance value, until a transfer function resulting from performing the 2D simulation matches the reference transfer function. The modified impedance value used in performing the 2D simulation resulting in the transfer function matching the reference transfer function is acoustic impedance of the liner.

According to an embodiment, defining the 3D computer-based model of the liner comprises receiving a computer-aided design (CAD) model of the liner and identifying (i) one or more parts of the liner and (ii) dimensions of the one or more parts based on the received CAD model. In turn, a computational surface mesh representing the liner is generated based on the identified one or more parts of the liner and the dimensions of the one or more parts. In such an embodiment the generated computational surface mesh is the defined 3D computer-based model of the liner.

Another embodiment generates a 3D model of the environment. According to such an embodiment, the generated 3D model of the environment includes a channel and the defined 3D computer-based model of the liner and, the defined 3D computer-based model of the liner is disposed on a bottom surface of the channel. In an example embodiment, generating the 3D model of the liner includes at least one of: (i) defining length of the channel in accordance with wavelength of a pressure wave in a flow and (ii) defining location of a solid trip in the 3D model based upon velocity of the flow.

Yet another embodiment receives an indication of test conditions and performs the digital experiment of the liner in the environment using (i) the defined 3D computer-based model of the liner, (ii) the generated 3D model of the environment, and (iii) the received indication of test conditions. In an embodiment, the received indication of test conditions includes flow conditions. Moreover, the received indication of test conditions can also include boundary conditions, such as an initial guess for the liner impedance boundary condition (which is used in creating the 2D model of the environment). Further, in another embodiment, performing the digital experiment of the liner in the environment using (i) the defined 3D computer-based model of the liner, (ii) the generated 3D model of the environment, and (iii) the received indication of test conditions, includes collecting pressure data from one or more digital sensors in the channel while subjecting the defined 3D computer-based model of the liner in the generated 3D model of the environment to the test conditions. Such an embodiment may generate the reference transfer function by computing a Fourier Transform of the collected pressure data.

In an embodiment the digital experiment is a computational fluid dynamics (CFD) simulation. In such an embodiment, performing the digital experiment of the liner in the environment using (i) the defined 3D computer-based model of the liner, (ii) the generated 3D model of the environment, and (iii) the received indication of test conditions includes: (1) generating a CFD input file based upon (a) the defined 3D computer-based model of the liner, (b) the generated 3D model of the environment, and (c) the received indication of test conditions; and (2) performing the CFD simulation using the generated CFD input file.

In an embodiment, the generated 2D model of the environment is a mesh-based model. In one such embodiment, the method further comprises at least one of: defining a pressure wave, setting resolution of the mesh-based model as a function of wavepacket wavelength of the defined pressure wave, and performing a flow convergence simulation to determine field data.

According to an embodiment, the transfer function resulting from performing the 2D simulation matches the reference transfer function when a difference metric between (i) the transfer function resulting from performing the 2D simulation and (ii) the reference transfer function, is below a threshold.

Yet another embodiment includes, in a given iteration, determining the modified impedance value. An embodiment determines the modified impedance value based on a difference (or differences) between (i) a given transfer function resulting from performing the 2D simulation and (ii) the reference transfer function. An embodiment may also determine the modified impedance value using an optimization algorithm. Moreover, according to an embodiment, the given transfer function may be from an iteration prior to the given iteration. Further still, an embodiment determines the modified impedance value (i.e., the next impedance value to test) by considering differences between (i) multiple transfer functions, e.g., a subset of transfer functions that have provided the best results and (ii) the reference transfer function.

In an example embodiment, modifying the impedance value comprises modifying at least one of the resistance value, the reactance value, and the non-linear coefficient value. Further, according to yet another embodiment, the non-linear coefficient value depends on a first derivative of local velocity of a flow.

Another embodiment is directed to a system for determining acoustic impedance of a liner. In such an embodiment, the system includes a processor and a memory with computer code instructions stored thereon. The processor and the memory, with the computer code instructions, are configured to cause the system to implement any embodiments or combination of embodiments described herein.

Yet another embodiment is directed to a computer program product for determining acoustic impedance of a liner. The computer program product includes one or more non-transitory computer-readable storage devices and program instructions stored on at least one of the one or more storage devices where, the program instructions, when loaded and executed by a processor, cause an apparatus associated with the processor to implement any embodiments or combination of embodiments described herein.

An aspect of an embodiment includes automatically generating a 3D numerical experiment setup. In this set-up, according to an embodiment, the liner is placed in a plane channel in which a travelling wave is generated. This represents the numerical equivalent of a real-world experimental test.

Another aspect includes collecting several measurements from the numerical simulation. In such an embodiment, pressure signals above the liner are recorded with a series of microphones. Further aspects include the processing of simulation measurements and the generation of a reduced model to calculate liner impedance. Yet another aspect in an embodiment is an optimization methodology that matches the numerical test results and reduced model in terms of a given target parameter by tuning the reduced model liner impedance.

According to an embodiment, the liner numerical experiment setup is generated using a pre-processing tool that imports a given liner 3D model and generates a complete virtual testing environment with the collateral geometrical entities and measuring domains to store the simulation data.

In an embodiment, the simulation data (i.e., the data from the 3D digital experiment) is processed using a series of scripts that can read and transform time-domain data to the frequency domain space and submit several reduced model analyses within an optimization loop to obtain the liner impedance (i.e., the reference transfer function). Yet another embodiment utilizes a tool, such as SIMULIA PowerACOUSTICS^{®} by Applicant-Assignee Dassault Systemes Simulia Corporation, to calculate a complex Fourier Transform of a series of time-domain pressure signals collected from a numerical test.

In an example workflow, a user prepares a liner geometry, e.g., surface mesh, in accordance with a series of guidelines that specify a nomenclature to use for relevant surfaces. According to an embodiment, the guidelines dictate given names that are assigned to the liner surfaces group and to the liner perforated plate hole surfaces in the liner CAD model. This allows such an embodiment to automatically identify the main sections of the liner and generate a digital experiment equivalent of the liner. Additionally, in yet another embodiment, a series of input parameters, which include, for example, flow conditions and target frequency, are provided as input, e.g., specified by a user.

An embodiment uses inputs (e.g., liner geometry and flow parameters) to launch a liner impedance eduction process. In such an embodiment, the process occurs in three phases. In phase-1 a numerical equivalent of a liner physical test is built. In other words, a digital twin of a real-world liner test is created. Phase-2 runs numerical tests using the digital twin and several measurements are stored and used in an impedance calculation process that follows. Phase-3 includes processing 3D simulation results, i.e., the stored measurements, to obtain the reference transfer function. In an embodiment, phase-3 includes transforming time domain data to frequency domain data and using the frequency domain data to obtain the reference transfer function. In phase-3 an equivalent 2D reduced model of the 3D simulation is generated. In turn, an optimization loop is executed that looks for a match between 3D and 2D results to identify an equivalent impedance value for the liner.

Other aspects include computer program products tangibly stored on non-transitory computer readable media and computation systems such as computer systems and computer servers.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 is a flowchart of a method for determining impedance of a liner according to an embodiment.
FIG. 2A is a 3D computer-based model of a liner that may be analyzed using embodiments.
FIG. 2B illustrates a top plate of the liner of FIG. 2A.
FIG. 2C illustrates a cell array of the liner of FIG. 2A.
FIG. 3A is a visual depiction of a 3D numerical experiment set-up according to an embodiment.
FIG. 3B is a visual depiction of a 3D numerical experiment set-up according to an embodiment.
FIG. 4A is a visual depiction of a 2D reduced model of the experiment of FIG. 3A.
FIG. 4B is a visual depiction of a 2D reduced model of the experiment of FIG. 3B.
FIG. 5 is a flowchart of a liner impedance eduction process according to an embodiment.
FIG. 6 is a flowchart of a method for determining liner impedance according to an embodiment.
FIG. 7A is a visualization of a grazing flow experiment setup according to an embodiment.
FIG. 7B is an illustration of grazing flow on a liner.
FIG. 8 is a simplified block diagram of a computer system for determining impedance of a liner according to an embodiment.
FIG. 9 is simplified block diagram of a computer network environment in which an embodiment may be implemented.

### DETAILED DESCRIPTION

A description of example embodiments follows.

As described above, noise simulation is a task implemented by existing simulation methods and oftentimes, these existing methods determine properties, e.g., noise reduction capabilities, of real-world objects, e.g., liners. Recently, however, objects of interest, e.g., liners, have become increasingly complex and improved methods for simulating the objects and determining properties of such objects are needed. Embodiments provide such functionality.

Embodiments relate to a newel full numerical process for the indirect eduction of liner impedance. In embodiments, the liner can have an arbitrarily complex geometry. The ability to determine impedance of complex liners has become increasingly important in the aircraft industry, amongst other industries.

Aircraft turbofan engines produce thrust by compressing, combusting, and expanding a certain amount of ingested air. At the same time, in an outer section of the engine, a fan pulls cold air and accelerates the cold air without undergoing any thermal cycle. This secondary section is called bypass, and produces thrust without increasing engine emissions.

In recent years, engines have evolved towards low-emissions layouts. The common trend among major engine manufacturers to implement these low-emission layouts has been to move towards engines with larger bypass ratios (i.e., larger bypass sections and larger fans). This trend not only reduced emissions, but also changed the main noise generation mechanism of engines. In older low bypass ratio engines, most of the noise is generated by the engine jet. However, in modern engines (i.e., low-emission engines with larger bypass ratios), the engine fan and the interaction of the fan's wake with the Outlet Guide Vane (OGV), which is a stage placed downstream of the fan to straighten the flow, is the main source of engine noise.

In order to reduce the noise generated by the fan, engine manufacturers have tested several different solutions. One such solution is the placement of acoustic liners in the engine nacelle internal surfaces. Liners are passive devices that are able to absorb near wall pressure fluctuations so as to reduce the noise radiated by the engine. In their basic layout, liners include a perforated surface on top of a series of hollow cells. The passage of air in and out of the cells through the perforated plate generates a dumping reaction to an external pressure fluctuation that can reduce the pressure fluctuation's intensity in a given frequency range. The shape and dimensions of the cells affect the range of frequencies over which the liner provides large or small noise reduction.

In recent years, new liner layouts emerged with enhanced noise reduction capabilities. Moving away from the more basic forms, with a perforated plate on top of a series of rectangular cells, new designs utilize non-uniform perforation patterns and cell layouts. These new liners increased the range of frequencies for which noise can be reduced.

The capability to reduce noise for a given frequency is measured in terms of impedance. Impedance is the equivalent of a resistance in the complex space, and can be calculated via experimental testing for simple liner geometries. However, with the appearance of more complex liner designs, standard empirical methods to measure impedance have failed. Due to this, in recent years, new indirect methods (both empirical and numerical) have become popular. These indirect methods, in general, replace local velocity and pressure measurement in proximity of the liner with an analysis of the change in the intensity of a pressure wave as the pressure wave travels on top of the liner.

At the same time, several publications have showed how the flow behavior within a liner can be modeled numerically in detail. Lattice Boltzmann Method (LBM) based solvers, in particular, are well suited for this kind of application, due to their capability to deal with complex geometries and their intrinsic low numerical dissipation, which is a crucial factor in high-fidelity acoustic calculations.

Embodiments propose a newel simulation based process to calculate the equivalent impedance of an arbitrarily complex liner. An embodiment uses SIMULIA PowerFLOW^{®} by Applicant-Assignee Dassault Systemes Simulia Corporation to obtain real-time measurement from the liner (replacing the need for real world testing) and pairs the real-time measurement from the liner with an indirect impedance eduction method that determines the liner impedance by running several reduced order simulations on an equivalent acoustics model of the original liner.

Being able to calculate a liner impedance numerically saves an enormous amount of time in physical testing. Moreover, acoustics measurements in a real-world scenario are inevitably affected by a large degree of uncertainty. The embodiments presented herein implement an automated process to calculate the equivalent impedance of a generic liner. Embodiments are independent of the specific liner layout, and can be adopted for arbitrarily complex liner geometries.

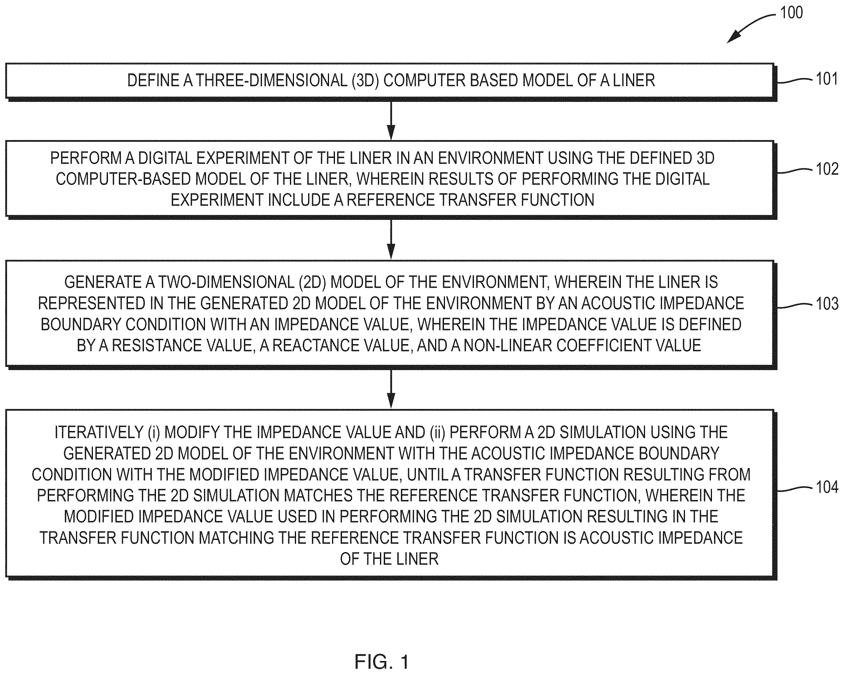

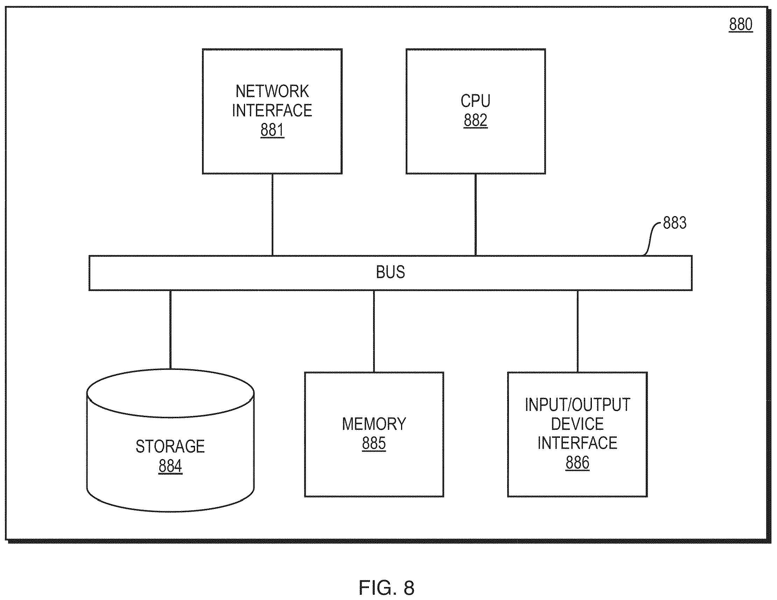

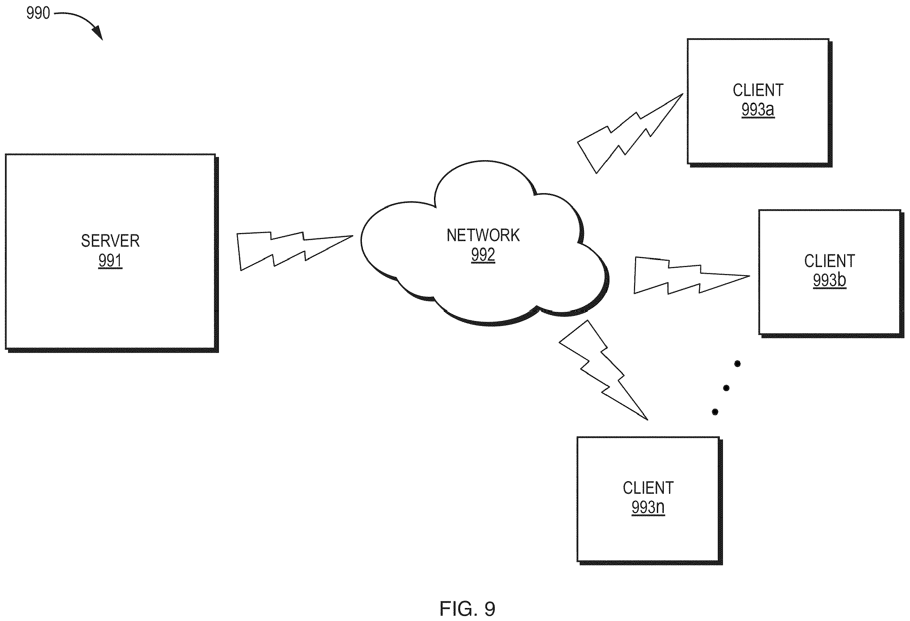

FIG. 1 is a flowchart of a method 100 for determining impedance of a liner according to an embodiment. The method 100 is computer implemented and, as such, the functionality and effective operations, e.g., the steps 101-104, can be automatically implemented by one or more digital processors. Moreover, the method 100 can be implemented using any computer device or combination of computing devices known in the art. Amongst other examples, the method 100 can be implemented using the computer system 880 described herein below in relation to FIG. 8 and the computer network environment 990 described herein below in relation to FIG. 9.

The method 100 starts at step 101 by defining a 3D computer-based model of a liner. Next, at step 102 a digital experiment of the liner is performed in an environment using the defined 3D computer-based model of the liner. An embodiment implements the digital experiment in accordance with procedures known to those of skill in the art. For instance, one such embodiment utilizes known procedures for setting the mesh size and sampling frequency. Results of performing the digital experiment at step 102 include a reference transfer function. To continue, at step 103, a 2D model of the environment is generated. The liner is represented in the generated 2D model of the environment by an acoustic impedance boundary condition with an impedance value where the impedance value is defined by a resistance value, a reactance value, and a non-linear coefficient value. In turn, at step 104, the method 100 iteratively (i) modifies the impedance value and (ii) performs a 2D simulation using the generated 2D model of the environment with the acoustic impedance boundary condition with the modified impedance value, until a transfer function resulting from performing the 2D simulation matches the reference transfer function. In other words, the iteration at step 104 sets the impedance value for the boundary condition (representing the liner) and performs a 2D simulation using said set impedance value to determine a resulting transfer function and the resulting transfer function is compared to the reference transfer function (determined at step 102). This functionality is repeated until the two transfer functions (the transfer function determined at step 102 and the transfer function determined at step 104) match. In the method 100, the modified impedance value used in performing the 2D simulation resulting in the transfer function matching the reference transfer function is acoustic impedance of the liner.

An embodiment implements the 2D simulation in accordance with procedures known to those of skill in the art. For instance, one such embodiment utilizes known procedures for setting the mesh size and sampling frequency of the 2D simulation.

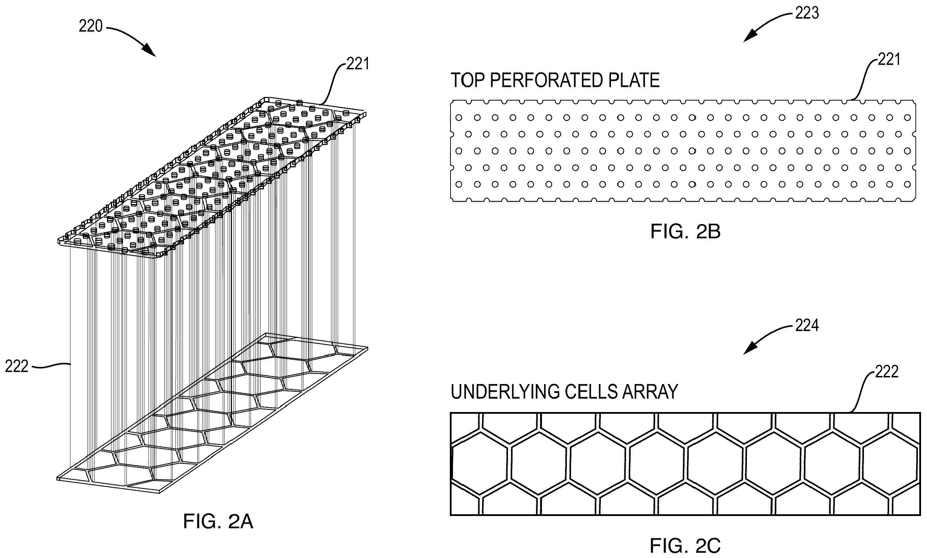

According to an embodiment, defining the 3D computer-based model of the liner at step 101 comprises receiving a computer-aided design (CAD) model of the liner and identifying (i) one or more parts of the liner and (ii) dimensions of the one or more parts based on the received CAD model. In an embodiment, the CAD model of the liner is formed, i.e., defined by entities, such as points, lines, and surface elements. In such an embodiment, the elements in the received model are grouped and the groups are named, e.g., prior to receiving the model. An embodiment accesses the grouping and group name data and therefrom identifies the parts and positions of the liner parts and the dimensions of the parts by calculating min/max coordinates of the triangles that make up each group. To continue, a computational surface mesh representing the liner is generated based on the identified one or more parts of the liner and the dimensions of the one or more parts. In such an embodiment the generated computational surface mesh is the defined 3D computer-based model of the liner at step 101. Further, an example of a liner CAD model 220 that may be used in embodiments of the method 100 is described herein below in relation to FIG. 2A. Further, in another embodiment, dimensions of a real-world liner are measured and the dimensions are used at step 101 to generate the computer based model of the liner.

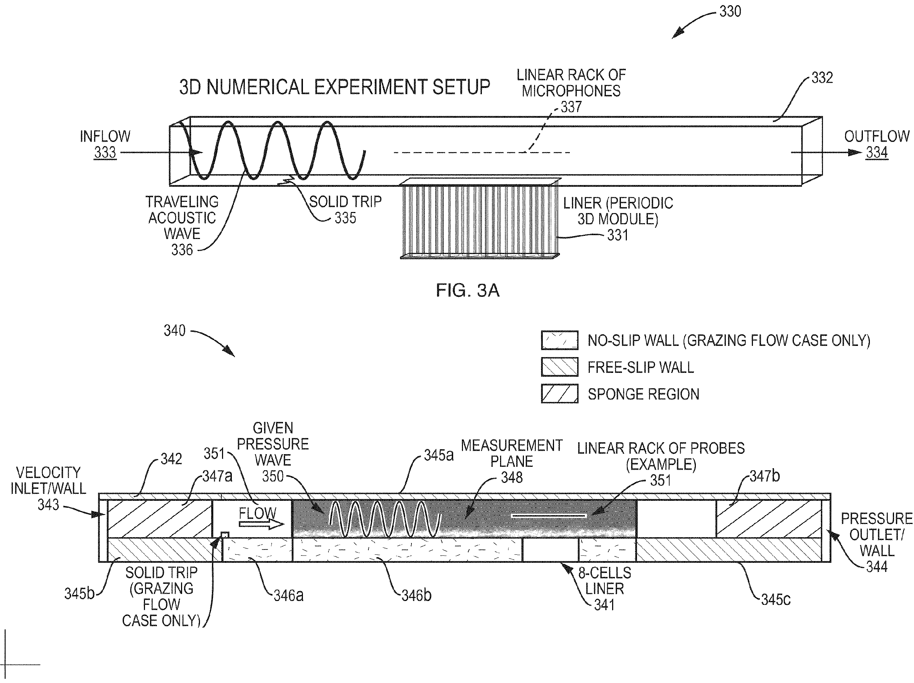

Another embodiment of the method 100 generates a 3D model of the environment. According to such an embodiment, the generated 3D model of the environment includes a channel and the defined 3D computer-based model of the liner (from step 101). In such an embodiment the defined 3D computer-based model of the liner is disposed on a bottom surface of the channel. An example of such an environment model 330 is described herein below in relation to FIG. 3A. In an embodiment, generating a 3D model of the environment includes at least one of: (i) defining length of the channel in accordance with wavelength of a pressure wave in a flow (e.g., in the channel) and (ii) defining location of a solid trip in the 3D model based upon velocity of the flow (e.g., when flow is present).

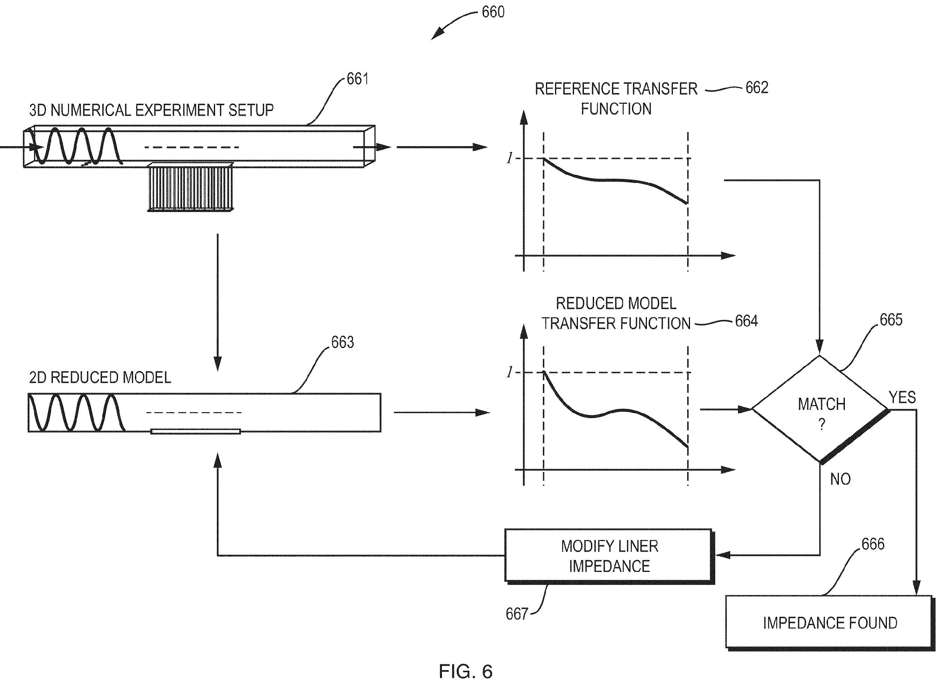

Yet another embodiment of the method 100 receives an indication of test conditions. Example test conditions that may be received are listed in Table 1. Such an embodiment performs the digital experiment of the liner in the environment at step 102 using (i) the defined 3D computer-based model of the liner, (ii) the generated 3D model of the environment, and (iii) the received indication of test conditions. In an embodiment, the received indication of test conditions includes flow conditions. Further, in another embodiment, performing the digital experiment of the liner in the environment at step 102 using (i) the defined 3D computer-based model of the liner, (ii) the generated 3D model of the environment, and (iii) the received indication of test conditions includes collecting pressure data from one or more digital sensors in the channel while subjecting the defined 3D computer-based model of the liner in the generated 3D model of the environment to the test conditions. Such an embodiment may generate the reference transfer function by computing a Fourier Transform of the collected pressure data. An example transfer function 662 that may be generated at step 102 is shown in FIG. 6 and described herein below.

In an embodiment, the digital experiment performed at step 102 is a computational fluid dynamics (CFD) simulation. In such an embodiment, the digital experiment of the liner in the environment is performed at step 102 using (i) the defined 3D computer-based model of the liner, (ii) the generated 3D model of the environment, and (iii) the received indication of test conditions. Moreover, performing the experiment at step 102, includes (1) generating a CFD input file based upon (i) the defined 3D computer-based model of the liner, (ii) the generated 3D model of the environment, and (iii) the received indication of test conditions; and (2) performing the CFD simulation using the generated CFD input file. An embodiment generates the CFD input file and performs the CFD simulation using procedures known to those of skill in the art. For instance, one such embodiment utilizes known procedures for setting the mesh size and sampling frequency of the CFD simulation.

In an embodiment of the method 100, a channel of the 3D environment is an elongated box and, at step 103, the 2D model is generated by replacing the elongated box with a rectangle with similar dimensions to the elongated box. Further, the 3D liner is replaced by a line in the 2D domain, i.e., 2D model, with an impedance boundary condition applied. In an embodiment, this impedance boundary condition matches the 3D liner axial position and length. In yet another embodiment of the method 100, the 2D model of the environment generated at step 103 is a mesh-based model. One such embodiment of the method 100 further comprises at least one of: defining a pressure wave, setting resolution of the mesh-based model as a function of wavepacket wavelength of the defined pressure wave, and performing a flow convergence simulation to determine field data. According to an embodiment, the flow convergence simulation is performed, using an automatically determined set-up (e.g., a set-up based on the time needed by the flow to move from the trip to the liner), to simulate a period of time in which a stable velocity and pressure field in the channel is attained. In an embodiment, when the flow convergence simulation starts, pressure gradually builds up until a momentum balance between pressure and velocity is reached and flow quantities become stationary in time (regime flow conditions). Moreover, according to an embodiment, example field data include pressure, temperature, density, velocity, and turbulence quantities (K and omega).

According to an embodiment of the method 100, the transfer function resulting from performing the 2D simulation (at step 102) matches the reference transfer function (in step 104) when a difference metric between (i) the transfer function resulting from performing the 2D simulation and (ii) the reference transfer function is below a threshold. Difference metrics that can be utilized in embodiments include least square error and L2 norm, amongst other examples.

As described above, in the method 100, the impedance value is defined by a resistance value, a reactance value, and a non-linear coefficient value. As such, according to an embodiment, modifying the impedance value at step 104 includes modifying at least one of: the resistance value, the reactance value, and the non-linear coefficient value. According to an example embodiment, resistance and reactance are the real and imaginary parts, respectively, of the complex impedance, and the non-linear coefficient is an additional real parameter that affects resistance. In an embodiment, the non-linear coefficient value depends on a first derivative of local velocity of a flow, e.g., an air flow across the liner. According to an embodiment local velocity of flow pertains to velocity close to a wall of the liner.

FIG. 2A illustrates an example of a liner geometry 220 that includes a perforated plate 221 and an underlying array of cells 222 for which impedance can be determined using embodiments. Further, FIG. 2B is a top view 223 of the plate 221 and FIG. 2C is a top view of the array of cells 222. In an embodiment, the liner geometry 220 is stored in a CAD file that contains a digital representation of a portion of a real-world world liner. In an embodiment, a user prepares the geometry 220 by separating holes of the perforated plate 221 from the rest of the geometry. The geometry 220 may be received at step 101 of the method 100 and used to define the 3D computer-based model of the liner.

FIG. 3A illustrates a 3D numerical experiment set-up 330 according to an embodiment. The set-up 330 is an example of a 3D numerical experiment set-up that may be utilized at step 102 of the method 100. In an embodiment, the set-up 330 is created by importing the 3D liner model 331 and placing the model 331 inside a flat channel 332 with a perforated plate laying at the floor level of the channel 332. In the channel 332 air can flow in a streamwise direction from the inflow section 333 to the outflow 334 (grazing flow case, i.e., flow that moves over the liner, "scraping" the surface of the liner) or there can be no average flow movement (no-flow case). In an embodiment, a solid trip 335 may be placed upstream of the liner 331 to force turbulence transition in grazing flow cases. According to an embodiment, the solid trip 335 is a solid element that is a step-like structure in the channel 332. The solid trip 335 generates turbulence in the flow close to the channel 332 floor. In the set-up 330 a traveling pressure wave 336 is generated upstream of the liner 331 and moves streamwise during a simulation performed using the set-up 330.

In the experimental set-up 330, the liner 3D module 331 is a periodic geometry along both the channel streamwise and spanwise direction. This model 331 represents a portion of a larger liner. According to an embodiment, the liner module 331 models 8-10 cells in the streamwise direction, while along the spanwise direction a minimum of 1 cell is modeled.

The set-up 330 also includes a linear rack of microphones 337, or other such measurement implement(s), that is placed above the liner 331. Microphone number and position can be modified by a user, according to an embodiment. Multiple racks of microphones 337 can also be used. An embodiment utilizes 100 microphones 337 placed on a single linear rack at mid channel 332 height. Further, it is noted that embodiments can utilize probes, e.g., microphones, on multiple linear racks.

FIG. 3B is a visual depiction of a 3D numerical experiment set-up 340 according to another embodiment. The set-up 340 includes a liner 341 and a channel 342. The channel 342 is composed of elements with various properties. For instance, the channel 342 includes the inlet 343, outlet 344, free-slip wall portions (wall without attrition, i.e., friction) 345a-c, measurement plane 348, and sponge regions (regions with high flow viscosity) 347a-b. In the case of grazing flow, the channel 342 is defined to include no-slip wall (wall with attrition) portions 346a-b and a solid trip 349. Like the set-up 330, in the set-up 340, a traveling pressure wave 350 is generated upstream of the liner 341 and moves streamwise 351 during a simulation performed using the set-up 340. The set-up 340 also includes a linear rack of microphones 351.

In embodiments, length of the channel, e.g., 332 and 342, can be set so as to accommodate a certain number of waves (15+) before and after the liner, e.g., 331 and 341. Further, in an embodiment that simulates grazing flow, a PowerFLOW^{®} simulation is run at the beginning of the process to obtain a developed boundary layer over the liner. The set-ups 330 and 340 may be used to run simulations for a single frequency at a time with a specific plane wave shape. An embodiment sets a given pressure wave, e.g., 336, 350, upstream of the liner, e.g., 331, 341, via a specialized code (OptydB_fieldmod), which can access and manipulate 3D simulation results files. Further, in an embodiment, a snapshot of the 3D flow field with added pressure waves is used as an initial condition for the acoustic run.

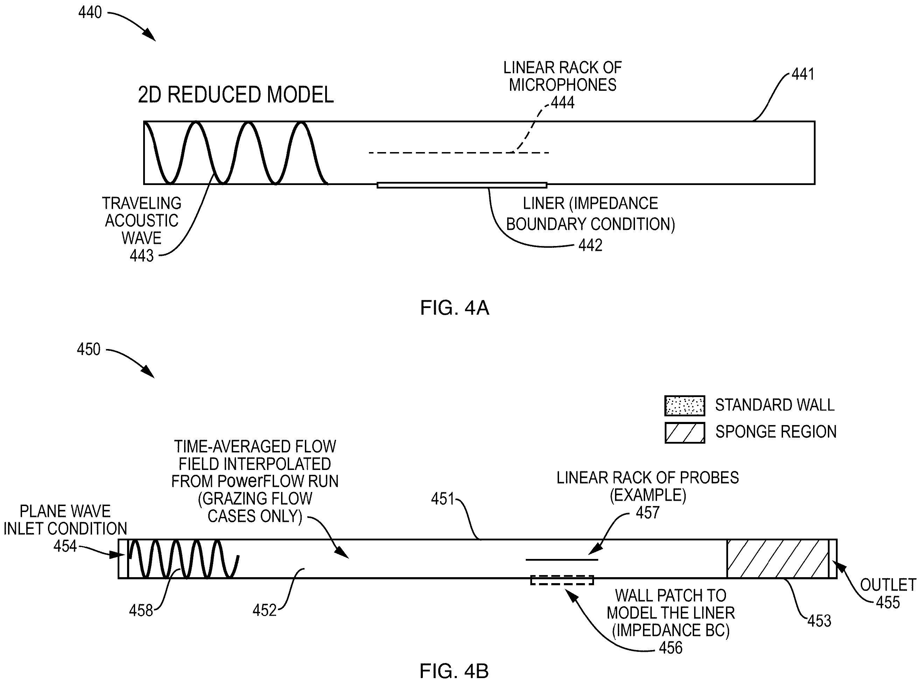

In an embodiment, after performing a 3D numerical experiment (e.g., at step 102 of the method 100), a reduced 2D model is derived (e.g. at step 103 of the method 100). FIG. 4A illustrates an example 2D model 440, according to an embodiment, derived from the set-up 330 of FIG. 3A. The model 440 is an example of an environment model that may be generated at step 103 of the method 100 of FIG. 1. The model 440 includes a channel 441 with a similar channel length to the 3D model, and the 3D liner, e.g., 331, is replaced by a patch with the same streamwise extension of the 3D liner and a boundary impedance condition 442 that models the acoustic effects of the liner. The 2D model 440 uses a time-averaged velocity, pressure, temperature, and turbulence field dataset taken from the 3D simulation in order to consider the effects of the average air flow (this dataset is not needed in no-flow cases). A traveling wave 443 is set similarly to the 3D case with the same frequency. Further, the channel 441 includes a linear rack of microphones 444 to collect data, e.g., pressure data.

FIG. 4B illustrates an example 2D model 450, according to an embodiment, derived from results generated using the set-up 340 of FIG. 3B. The model 450 includes a channel 451 composed of a standard portion 452 and sponge region 453. The channel 451 has an inlet 454 and outlet 455. In the model 450, a pressure wave 458 is set at the inlet 454. The 2D model 450 replaces the filter 341 from the 3D setup 340 with a wall patch impedance condition 456. Further, the channel 451 includes a linear rack of microphones 457 to collect data.

In an embodiment, the 2D models, e.g., 440 and 450, are represented by rectangular element meshes. Further, according to an embodiment, the reduced 2D model (e.g., 440, 450) is solved in the frequency domain for acoustics by using a Finite Element Method (FEM) code (OptydB_gfd) which solves acoustic wave propagation within the 2D channel. Working in the frequency domain is what allows using a complex impedance boundary condition for the liner, e.g., 442, 456. According to an embodiment, a simulation runs for a single frequency at a time and makes use of an impedance boundary condition (frequency domain) to model the liner. In cases of grazing flow, an average flow field is interpolated on the 2D mesh using the time-averaged results of the PowerFLOW^{®} simulation (the 3D simulation). A plane pressure wave is set at the inlet of the domain. Mesh resolution is defined as the minimum between channel height divided by 100 and 1/30th of the pressure wave wavelength.

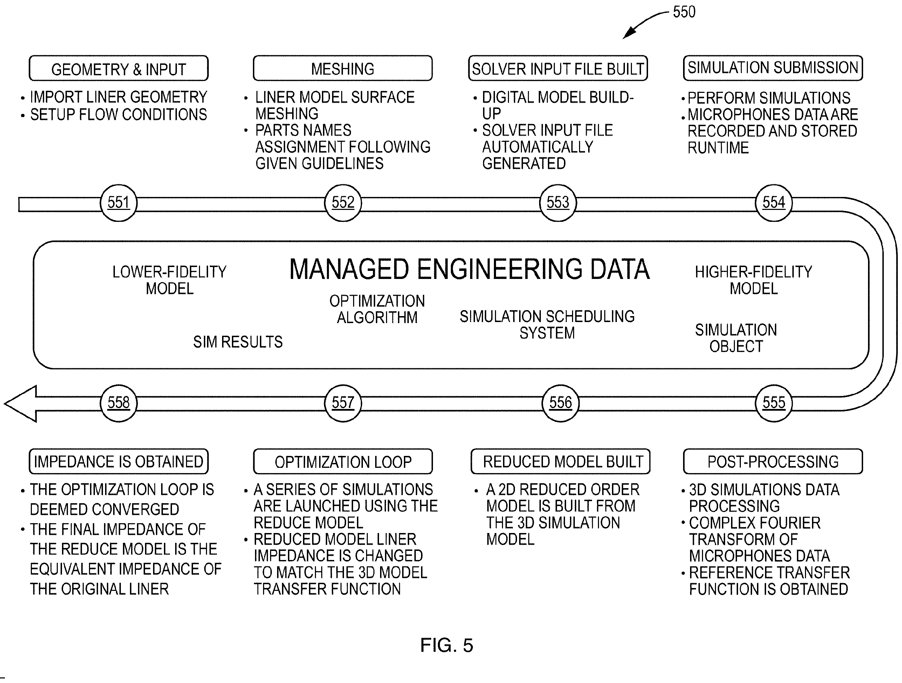

FIG. 5 is a flowchart of a liner impedance eduction process 550 according to an embodiment. The process 550 includes three phases, PHASE-1, PHASE-2, and PHASE-3. PHASE-1 is a pre-processing phase that includes steps 551-553. PHASE-2 is a 3D simulation phase that includes step 554 and PHASE-3 includes steps 555-558.

During pre-processing (PHASE-1), a 3D numerical experimental test is automatically generated based on liner geometry and a series of input parameters specified by a user. Specifically, PHASE-1 begins at step 551 by importing or otherwise defining the liner geometry, i.e., model, and setting-up flow conditions. At step 552, the liner model is meshed and part names of the model are assigned in accordance with given guidelines. In an embodiment, the liner model is meshed and part names of the model are assigned using SIMULIA PowerDELTA^{®} by Applicant-Assignee Dassault Systemes Simulia Corporation. Next, at step 553 a solver input file is built. Building the solver input file at step 553 includes building a digital model (such as the model 330) and, based on the digital model, generating the solver input file. An embodiment builds the digital model and generates the solver input file using functionality within SIMULIA PowerCASE^{®} by Applicant-Assignee Dassault Systemes Simulia Corporation, in which a python-based environment is scripted to automatically import the liner model, generate the simulation entities, set measurement domains, and generate the SIMULIA PowerFLOW^{®} input file.

In turn, at step 554, a 3D simulation is performed on a local or remote cluster (PHASE-2). According to an embodiment, SIMULIA PowerFLOW^{®} is used to perform the simulation at step 554. During the simulation (554), pressure signals are collected on a linear rack of microphones placed above the liner and recorded and stored. An embodiment uses SIMULIA PowerACOUSTICS^{®} by Applicant-Assignee Dassault Systemes Simulia Corporation to collect this data.

Once the 3D simulation completes (step 554), PHASE-3 starts. At step 555 the 3D simulation data (resulting from the simulation at step 554) is processed. The processing at step 555 includes computing a complex Fourier Transform of each microphone signal. According to an embodiment, the Fourier Transform is computed using SIMULIA PowerACOUSTICS^{®}. A reference transfer function is determined at step 555 from the norm of the ratio between each microphone complex pressure and the first microphone of the rack (the one at the most upstream position) at a given frequency of interest. The curve, i.e., reference transfer function, obtained measures the change in intensity, for the selected frequency, of the pressure wave traveling on top of the liner subject to the simulation (performed at step 554).

Once the reference transfer function is obtained at step 555, the process 550 moves to step 556 and a 2D reduced order model (e.g., 440) is built from the 3D simulation data. In turn, at step 557, an optimization loop is launched in which several simulations are submitted using the 2D reduced order model (generated at step 556). According to an embodiment, the optimization loop runs a series of 2D simulations in the frequency domain to match the transfer function calculated from PowerFLOW^{®} results generated using the 3D model with results from the 2D model.

Resistance and reactance are the real and imaginary parts of the complex liner impedance. The optimization loop implemented at step 557 works by independently modifying these two quantities together with a third parameter, i.e., a non-linear coefficient value, to change the reduced model (i.e., 2D model) liner impedance. According to an embodiment, this third parameter is an additional impedance coefficient that depends on the first derivative of velocity of a flow across the liner. In an embodiment, the velocity is a local velocity, e.g., velocity of flow close to a wall of the liner. In an embodiment, the third parameter is used to account, to a certain extent, for non-linear effects that could be non-negligible for certain liner layouts. Starting from an initial guess value for resistance, reactance, and the non-linear coefficient, at each optimization step (of the optimization loop 557) the boundary condition that models the liner is changed and the transfer function reevaluated. This process continues until error between the reference transfer function (generated at step 555 based on the 3D simulation data from step 554) and a transfer function from the reduced model falls below a specified threshold. Once this occurs, the optimization loop 557 is deemed converged at step 558, and the last value of impedance used as a boundary condition in the reduced model is assumed as the original 3D liner equivalent impedance.

It is noted that the depicted process 550 provides the liner impedance for a given frequency. As such, the process 550 can be repeated for each additional frequency of interest. Further, in embodiments of the method 550, a standard SIMPLEX algorithm can be used in PHASE-3, e.g., at step 557.The SIMPLEX is both robust and simple, however, any multiparameter optimization algorithm can be implemented in embodiments.

Embodiments, e.g., the process 550, can utilize input parameters. Table 1 below lists example input parameters that may be used by embodiments. Table 1 represents an example set of parameters used in PHASE-1, e.g., steps 551-553 of the process 550.

**Table 1: Input Parameters**

| **Parameter Name** | **Description** |
|---|---|
| Geometry scale | Geometry units: "mm", "cm", "m" |
| Mach number | Channel flow Mach number |
| Number of waves | Number of upstream pressure wave periods to simulate, e.g., 15 or more |
| Frequency | Frequency for the current case |
| Wave intensity | Pressure wave intensity [dB] |
| Min frequency | Min frequency for the study |
| Max frequency | Max frequency for the study |
| Temperature | Asymptotic flow temperature |
| Pressure | Channel pressure level (downstream) |
| Viscosity | Fluid kinematic viscosity |
| Channel height | Channel height |
| Orifices diameter | Diameter of the perforated plate orifices or similar reference dimension |
| Liner geometry file | Path to the liner geometry file |
| Trip geometry file | Path to the solid trip geometry file |
| Boundary layer thickness | When a value <= 0 is given, the process looks for a file "ref_BL.txt" that contains a reference Boundary Layer velocity profile |

FIG. 6 is a schematic representation of an impedance eduction method 660 according to an embodiment. The process 660 begins by using a 3D numerical experiment setup 661 to generate a reference transfer function 662. The 3D numerical experiment setup 661 is also used to generate a 2D reduced model 663. The 2D model 663 has a boundary condition with an impedance value and this model 663 is used to determine a reduced model transfer function 664. The reference transfer function 662 and reduced model transfer function 664 are compared 665 to determine if the transfer function 662 and transfer function 664 match. If the transfer functions (662 and 644) match, the impedance is found 666. Specifically, the impedance value in the reduced model 663 used to generate the transfer function 664 that matches the transfer function 662 is the impedance of the liner. However, if the impedances indicated by the functions 662 and 664 are determined at step 665 to not match, the process 660 moves to step 667 where the liner impedance is modified. This modified 667 impedance is used in the model 663 and the process 660 continues until a match is found at step 665.

In an embodiment, OptydB_gfd FEM solver can handle an additional parameter when modeling the liner. This additional parameter is a coefficient that adds a non-linear contribution proportional to the first derivative of the near wall velocity. Such an embodiment then works by minimizing error between the reference (e.g., 662) and reduced model transfer function (e.g., 664) by modifying three parameters: (1) the liner resistance, (2) the liner reactance, and (3) the liner non-linearity coefficient.

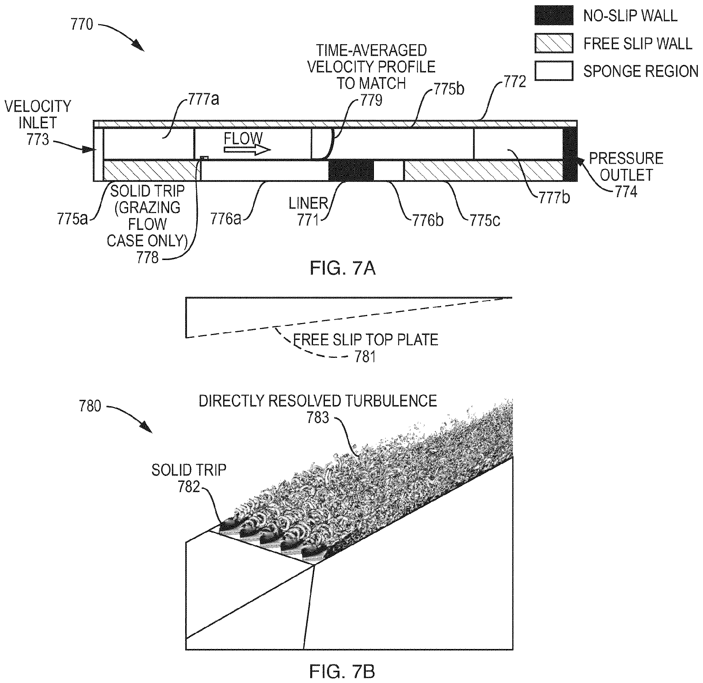

Embodiments can also handle cases where there is grazing flow. FIG. 7A is a visualization of a grazing flow 2D experiment setup 770 according to an embodiment. The set-up 770 includes a liner 771 and a channel 772. The channel 772 is composed of elements with various properties. More specifically, the channel 772 includes the inlet 773, outlet 774, free-slip wall portions 775a-c, no-slip wall portions 776a-b, sponge regions 777a-b, and solid trip 778. A time-averaged wall boundary layer velocity profile 779 upstream from the liner 771 is given in input to the process.

In the grazing flow case, an embodiment automatically calculates the solid trip 778 distance from the liner 771 in order to match the given velocity profile 779. Moreover, mesh resolution in proximity of the channel floor is refined enough to resolve the boundary layer between the trip 778 and the liner 771. Such an embodiment may also run an additional flow convergence simulation at the beginning of the process to obtain initial field data.

FIG. 7B is a visualization 780 of grazing flow on a liner. The visualization 780 shows the free slip top plate 781, solid trip 782, and turbulence 783.

An embodiment provides a fully automatic process to calculate impedance of a generic liner. An example process, according to an embodiment, is divided into three steps: (1) generating a virtual test model using a periodic 3D module of the liner; (2) running 3D high-fidelity CFD analysis; and (3) running an optimization loop using a 2D reduced order model to match the original liner impedance. According to an embodiment, the matching between the 3D model and the reduced 2D model is measured by the degree of similarity of a specific transfer function that is measured in both cases.

Embodiments allow for fully automated execution of the three aforementioned steps. Moreover, embodiments can run on a computer cluster and replace real world experimental tests with a high-fidelity acoustics simulation of the original liner. Such a fully computational process can replace the time consuming and complex experimental tests usually needed to determine liner impedance.

An example embodiment is directed to a computer implemented automated methodology for calculating the equivalent impedance of an arbitrarily complex liner. Such an embodiment imports a file containing a digitized representation of a three-dimensional liner geometry in a virtual testing environment where the liner is mounted on the floor of a flat channel, with grazing flow and a travelling pressure wave. In turn, such an embodiment performs high-fidelity CFD simulations to compute a transfer function along a series of microphones placed above the liner. Next, a reduced 2D model is generated that is an equivalent of the 3D numerical testing environment previously simulated. In the 2D model the liner is replaced by an acoustic impedance boundary condition. To continue, several short simulations are performed using the reduced model in an optimization loop where the liner impedance is tuned to match the reference transfer function obtained from the 3D simulation.

In an embodiment, importing the files includes reading the original liner CAD model, identifying main parts of the liner by name (e.g., liner surfaces and perforated plate holes), generating a computational surface mesh, and obtaining the dimensions of the liner's previously noted main parts by accessing coordinates of the liner mesh elements. Further, an embodiment generates collateral virtual entities, such as the channel, measurement surfaces and points, and channel subdomains, around the liner to create a 3D virtual testing environment that includes a flat channel in which the liner lies on the channel floor surface. As part of the virtual testing setup, flow conditions can be setup based on (i) user inputs and (ii) boundary conditions that are able to generate both a grazing flow over the liner and a traveling pressure wave within the channel. Further, as part of processing during the importation, a CFD solver input file can be generated.

According to another embodiment, performing the CFD simulations includes using a scheduling system to submit single or multiple runs on a remote or local cluster and using centralized storage memory to store the data generated by the 3D engine simulation for subsequent post-processing.

Further, in an embodiment, generating the reduced 2D model includes running a script or other such automated procedure to read the 3D solver input file and generate, from the 3D solver input file, a 2D reduced model. In the generated 2D reduced model the liner is replaced by a surface patch with a given impedance boundary condition.

In an embodiment, the aforementioned 2D simulations performed by running a script or alternative automated process utilize such a script or process that is able to: run simulations using the previously generated 2D reduced order model, calculate the reduced model liner transfer function, implement an optimization algorithm that is able to identify a new tentative impedance value based on error between the reference liner transfer function and the reduced model transfer function, and declare convergence of the optimization loop once the error falls below a given threshold so as to define the original 3D liner equivalent impedance.

Advantageously, embodiments can carry out the liner impedance calculation in an automatic way, which, according to an embodiment, results from the tools that are utilized to implement the embodiment and from the proposed methodology presented herein.

Further, embodiments reduce costs and time required to obtain an accurate liner impedance value.

Embodiments can determine impedance for a liner that exists in the real-world. In such an embodiment, the real-world liner is analyzed, e.g., measured, and results are used to build a model that is used in embodiments. In this way, such an embodiment can determine impedance of the real-world liner.

Further, results from embodiments can also be used to select amongst a plurality of different liner candidates. For example, multiple real-world liners can be evaluated using embodiments and, based upon the determined impedance of each liner, a given liner from amongst the plurality can be selected, e.g., a liner can be selected that meets impedance requirements. Further, such a liner can be incorporated into another real-world object, e.g., a jet-engine. Moreover, after determining impedance of a liner, embodiments can manufacture said liner for real-world applications.

### Computer Support

FIG. 8 is a simplified block diagram of a computer-based system 880 that may be used to implement any variety of the embodiments of the present invention described herein. The system 880 comprises a bus 883. The bus 883 serves as an interconnect between the various components of the system 880. Connected to the bus 883 is an input/output device interface 886 for connecting various input and output devices such as a keyboard, mouse, display, speakers, etc. to the system 880. A central processing unit (CPU) 882 is connected to the bus 883 and provides for the execution of computer instructions implementing embodiments, e.g., methods 100, 550, 660, etc. Memory 885 provides volatile storage for data used for carrying out computer instructions implementing embodiments described herein, such as those embodiments previously described hereinabove. Storage 884 provides non-volatile storage for software instructions, such as an operating system (not shown) and embodiment configurations, etc. The system 880 also comprises a network interface 881 for connecting to any variety of networks known in the art, including wide area networks (WANs) and local area networks (LANs).

It should be understood that the example embodiments described herein may be implemented in many different ways. In some instances, the various methods and systems described herein may each be implemented by a physical, virtual, or hybrid general purpose computer, such as the computer system 880, or a computer network environment such as the computer environment 990, described herein below in relation to FIG. 9. The computer system 880 may be transformed into the systems that execute the methods (e.g., 100, 550, 660) described herein, for example, by loading software instructions into either memory 885 or non-volatile storage 884 for execution by the CPU 882. One of ordinary skill in the art should further understand that the system 880 and its various components may be configured to carry out any embodiments or combination of embodiments of the present invention described herein. Further, the system 880 may implement the various embodiments described herein utilizing any combination of hardware, software, and firmware modules operatively coupled, internally, or externally, to the system 880.

FIG. 9 illustrates a computer network environment 990 in which an embodiment of the present invention may be implemented. In the computer network environment 990, the server 991 is linked through the communications network 992 to the clients 993a-n. The environment 990 may be used to allow the clients 993a-n, alone or in combination with the server 991, to execute any of the embodiments described herein. For non-limiting example, computer network environment 990 provides cloud computing embodiments, software as a service (SAAS) embodiments, and the like.

Embodiments or aspects thereof may be implemented in the form of hardware, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and thus, the data processors described herein are intended for purposes of illustration only and not as a limitation of the embodiments.

The teachings of all patents, published applications, and references cited herein are incorporated by reference in their entirety.

While example embodiments have been particularly shown and described, it will be understood by those skilled in the art that various changes in form and details may be made therein without departing from the scope of the embodiments encompassed by the appended claims.

For example, the foregoing description and details of embodiments in the figures reference Applicant-Assignee (Dassault Systemes Simulia Corporation) and Dassault Systemes, tools and platforms, for purposes of illustration and not limitation. Other similar tools and platforms are suitable.

## Claims

1. A computer-implemented method for determining acoustic impedance of a liner, the method comprising:
defining a three-dimensional (3D) computer-based model of a liner;
performing a digital experiment of the liner in an environment using the defined 3D computer-based model of the liner, wherein results of performing the digital experiment include a reference transfer function;
generating a two-dimensional (2D) model of the environment, wherein the liner is represented in the generated 2D model of the environment by an acoustic impedance boundary condition with an impedance value, wherein the impedance value is defined by a resistance value, a reactance value, and a non-linear coefficient value; and
iteratively (i) modifying the impedance value and (ii) performing a 2D simulation using the generated 2D model of the environment with the acoustic impedance boundary condition with the modified impedance value, until a transfer function resulting from performing the 2D simulation matches the reference transfer function, wherein the modified impedance value used in performing the 2D simulation resulting in the transfer function matching the reference transfer function is acoustic impedance of the liner.

2. The method of Claim 1 wherein defining the 3D computer-based model of the liner comprises:
receiving a computer-aided design (CAD) model of the liner;
identifying (i) one or more parts of the liner and (ii) dimensions of the one or more parts based on the received CAD model; and
generating a computational surface mesh representing the liner based on the identified one or more parts of the liner and the dimensions of the one or more parts, wherein the generated computational surface mesh is the defined 3D computer-based model of the liner.

3. The method of Claim 1 further comprising:
generating a 3D model of the environment, wherein the generated 3D model of the environment includes a channel and the defined 3D computer-based model of the liner, where the defined 3D computer-based model of the liner is disposed on a bottom surface of the channel.

4. The method of Claim 3 wherein generating the 3D model of the liner includes at least one of:
defining length of the channel in accordance with wavelength of a pressure wave in a flow; and
defining location of a solid trip in the 3D model based upon velocity of the flow.

5. The method of Claim 3 further comprising:
receiving an indication of test conditions; and
performing the digital experiment of the liner in the environment using (i) the defined 3D computer-based model of the liner, (ii) the generated 3D model of the environment, and (iii) the received indication of test conditions.

6. The method of Claim 5 wherein the received indication of test conditions includes flow conditions.

7. The method of Claim 5 wherein performing the digital experiment of the liner in the environment using (i) the defined 3D computer-based model of the liner, (ii) the generated 3D model of the environment, and (iii) the received indication of test conditions comprises:
collecting pressure data from one or more digital sensors in the channel while subjecting the defined 3D computer-based model of the liner in the generated 3D model of the environment to the test conditions.

8. The method of Claim 7 further comprising:
generating the reference transfer function by computing a Fourier Transform of the collected pressure data.

9. The method of Claim 5 wherein the digital experiment is a computational fluid dynamics (CFD) simulation and performing the digital experiment of the liner in the environment using (i) the defined 3D computer-based model of the liner, (ii) the generated 3D model of the environment, and (iii) the received indication of test conditions comprises:
generating a CFD input file based upon (i) the defined 3D computer-based model of the liner, (ii) the generated 3D model of the environment, and (iii) the received indication of test conditions; and
performing the CFD simulation using the generated CFD input file.

10. The method of Claim 1 wherein the transfer function resulting from performing the 2D simulation matches the reference transfer function when a difference metric between (i) the transfer function resulting from performing the 2D simulation and (ii) the reference transfer function is below a threshold.

11. The method of Claim 1 further comprising:
in a given iteration, determining the modified impedance value based on a difference between (i) a given transfer function resulting from performing the 2D simulation and (ii) the reference transfer function.

12. The method of Claim 1 wherein modifying the impedance value comprises:
modifying at least one of: the resistance value, the reactance value, and the non-linear coefficient value.

13. The method of Claim 1 wherein the non-linear coefficient value depends on a first derivative of local velocity of a flow.

14. The method of Claim 1 wherein the generated 2D model of the environment is a mesh-based model and the method further comprises at least one of:
defining a pressure wave;
setting resolution of the mesh-based model as a function of wavepacket wavelength of the defined pressure wave; and
performing a flow convergence simulation to determine field data.

15. A system for determining acoustic impedance of a liner, the system comprising:
a processor; and
a memory with computer code instructions stored thereon, the processor and the memory, with the computer code instructions, being configured to cause the system to perform the method according to any one of claims 1 to 14.

16. A computer program product comprising instructions, which, when the program is executed by a computer, cause the computer to perform the method according to any one of claims 1 to 14.
